# EUROPEAN PATENT APPLICATION

(11) **EP 4 668 701 A1**
(43) Date of publication of application: **24.12.2025**
(21) Application number: 25173363.0
(22) Date of filing: 29.04.2025
(51) Int. Cl.: H04L 45/24, H04L 45/7453

(54) **PROVIDING SYMMETRIC CONSISTENT HASHING IN A FORWARDING PLANE OF A NETWORK DEVICE**

(30) Priority: 21.06.2024 US 202463662741 P; 12.03.2025 US 202519078088
(71) Applicant: Juniper Networks, Inc., Sunnyvale, CA 94089-1206 (US)
(72) Inventor: B, Akhilesh, Sunnyvale (US); NESARI, Akshay R., Sunnyvale (US); BHISE, Chandresh Saulo, Sunnyvale (US); MICLEA, Marius Horia, Sunnyvale (US); KUMAR, Sachin, Sunnyvale (US)
(74) Representative: D Young & Co LLP

(57) **Abstract**

A network device may receive a hash key from a control plane of the network device, and may sort the hash key based on a next hop address field and to generate a sorted hash key. The network device may store the sorted hash key locally in a data plane of the network device, and may generate a sorted hash table based on the sorted hash key. The network device may utilize the sorted hash table to symmetrically route traffic with another network device.

## Description

### CROSS-REFERENCE TO RELATED APPLICATION

This Patent Application claims priority to U.S. Provisional Patent Application No. 63/662,741, filed on June 21, 2024, and entitled "PROVIDING SYMMETRIC CONSISTENT HASHING IN A FORWARDING PLANE OF A NETWORK DEVICE." The disclosure of the prior Application is considered part of and is incorporated by reference into this Patent Application.

### BACKGROUND

Network devices may utilize routing tables to route data throughout a network. Each routing table may include a hash table, which is a data structure that implements an associative array (e.g., an abstract data type that maps keys to values). A hash table uses a hash function to compute an index, also called a hash code, into an array of buckets or slots, from which a desired value can be found. During lookup, the key is hashed and the resulting hash indicates where the corresponding value is stored.

### SUMMARY

Particular aspects are set out in the appended independent claims. Various optional embodiments are set out in the dependent claims. Some implementations described herein relate to a method. The method may include receiving a hash key from a control plane of a network device, and sorting the hash key based on a next hop address field and to generate a sorted hash key. The method may include storing the sorted hash key locally in a data plane of the network device, and generating a sorted hash table based on the sorted hash key. The method may include utilizing the sorted hash table to symmetrically route traffic with another network device.

Some implementations described herein relate to a network device. The network device may include one or more memories, one or more processors, a control plane, and data plane. The one or more processors may be configured to receive a hash key from the control plane, sort the hash key based on a next hop address field and to generate a sorted hash key. The one or more processors may be configured to store the sorted hash key locally in the data plane, and generate a sorted hash table based on the sorted hash key. The one or more processors may be configured to receive first traffic provided from a customer and destined for a core network, and route the first traffic to the core network, through a firewall network device and the other network device, based on the sorted hash table.

Some implementations described herein relate to a computer-readable medium that encodes a set of instructions. The set of instructions, when executed by one or more processors of a network device, may cause the network device to receive a hash key from a control plane of the network device, wherein the hash key is a load-balance hash key function. The set of instructions, when executed by one or more processors of the network device, may cause the network device to sort the hash key based on a next hop address field and to generate a sorted hash key, and store the sorted hash key locally in a data plane of the network device. The set of instructions, when executed by one or more processors of the network device, may cause the network device to generate a sorted hash table based on the sorted hash key, and utilize the sorted hash table to symmetrically route traffic with another network device.

### BRIEF DESCRIPTION OF THE DRAWINGS

Figs. 1A-1L are diagrams of an example associated with providing symmetric consistent hashing in a forwarding plane of a network device.
Fig. 2 is a diagram of an example environment in which systems and/or methods described herein may be implemented.
Figs. 3 and 4 are diagrams of example components of one or more devices of Fig. 2.
Fig. 5 is a flowchart of an example process for providing symmetric consistent hashing in a forwarding plane of a network device.

### DETAILED DESCRIPTION

The following detailed description of example implementations refers to the accompanying drawings. The same reference numbers in different drawings may identify the same or similar elements.

The hash tables of network devices need to be symmetric and consistent so that data may be correctly load balanced to proper destinations of the network. For example, in scenarios where a service provider offers a security service, the service provider would like to keep traffic flows symmetric (e.g., a firewall that is processing traffic should see the traffic provided from a customer to the Internet and from the Internet to the customer). Symmetry is important because it is stateful in nature and a firewall may create session table entries accordingly in both directions. If the network devices fail to symmetrically route traffic, the customer may experience service and session disruptions. However, current techniques for managing hash tables fail to provide traffic flow consistency and symmetricity for upstream traffic and downstream traffic handled by network devices.

Thus, current techniques for managing hash tables consume computing resources (e.g., processing resources, memory resources, communication resources, and/or the like), networking resources, and/or the like, associated with failing to provide traffic flow consistency and symmetricity for upstream traffic and downstream traffic handled by network devices, handling service disruptions associated with failing to provide traffic flow consistency and symmetricity, handling session disruptions associated with failing to provide traffic flow consistency and symmetricity, and/or the like.

Some implementations described herein relate to providing symmetric consistent hashing in a forwarding plane of a network device. For example, a network device may receive a hash key from a control plane of the network device, and may sort the hash key based on a next hop address field and to generate a sorted hash key. The network device may store the sorted hash key locally in a data plane of the network device, and may generate a sorted hash table based on the sorted hash key. The network device may utilize the sorted hash table to symmetrically route traffic with another network device. The network device may receive first traffic provided from a customer and destined for a core network, and may route the first traffic to the core network, through a firewall network device and the other network device, based on the sorted hash table. The network device may receive second traffic provided from the core network and destined for the customer, wherein the second traffic is received from the other network device, via the firewall network device and based on the sorted hash table. The network device may provide the second traffic to the customer.

In this way, symmetric consistent hashing in a forwarding plane is provided for a network device. For example, a network device may utilize parameters that symmetrically select the same hash or selector table index in the upstream direction and the downstream direction. Hash tables across active network devices in the upstream and downstream directions may be symmetric so that a selected hash table index includes the same next hop in both directions. The network device may provide a forwarding plane driven solution that works independently of routing protocols. Thus, the network device conserves computing resources, networking resources, and/or the like that would otherwise have been consumed by failing to provide traffic flow consistency and symmetricity for upstream traffic and downstream traffic handled by network devices, handling service disruptions associated with failing to provide traffic flow consistency and symmetricity, handling session disruptions associated with failing to provide traffic flow consistency and symmetricity, and/or the like.

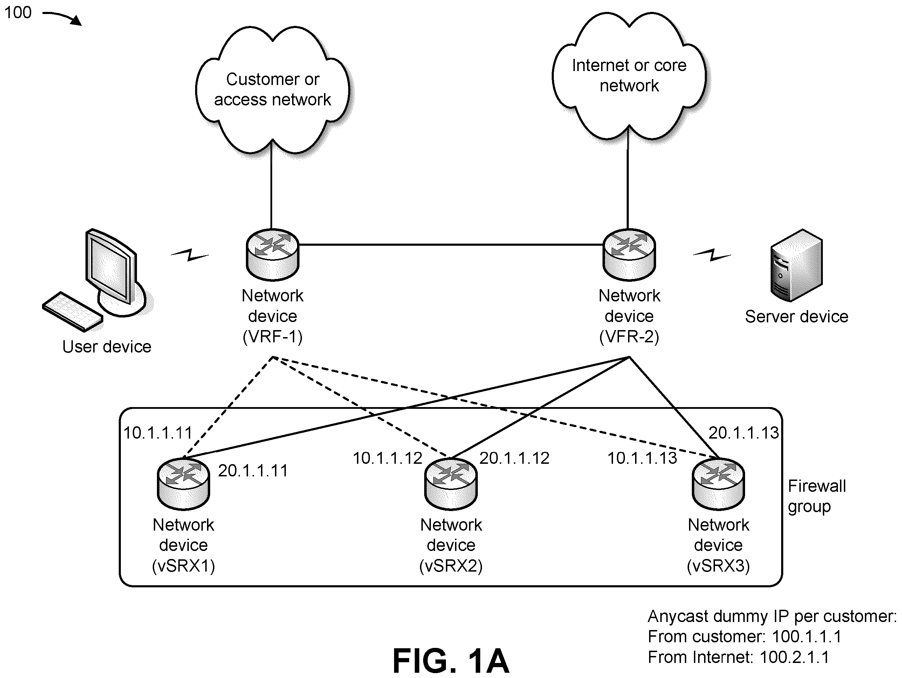

Figs. 1A-1L are diagrams of an example 100 associated with providing symmetric consistent hashing in a forwarding plane of a network device. As shown in Fig. 1A, the example 100 includes a customer or access network, an Internet or core network, a user device, a server device, and a plurality of network devices. Further details of the customer or access network, the Internet or core network, the user device, the server device, and the plurality of network devices are provided elsewhere herein. A first network device (VRF-1) may be associated with the customer or access network, and a second network device (VRF-2) may be associated with the Internet or core network. The first network device and the second network device may connect to a firewall group that includes a first firewall network device (vSRX1), a second firewall network device (vSRX2), and a third firewall network device (vSRX3).

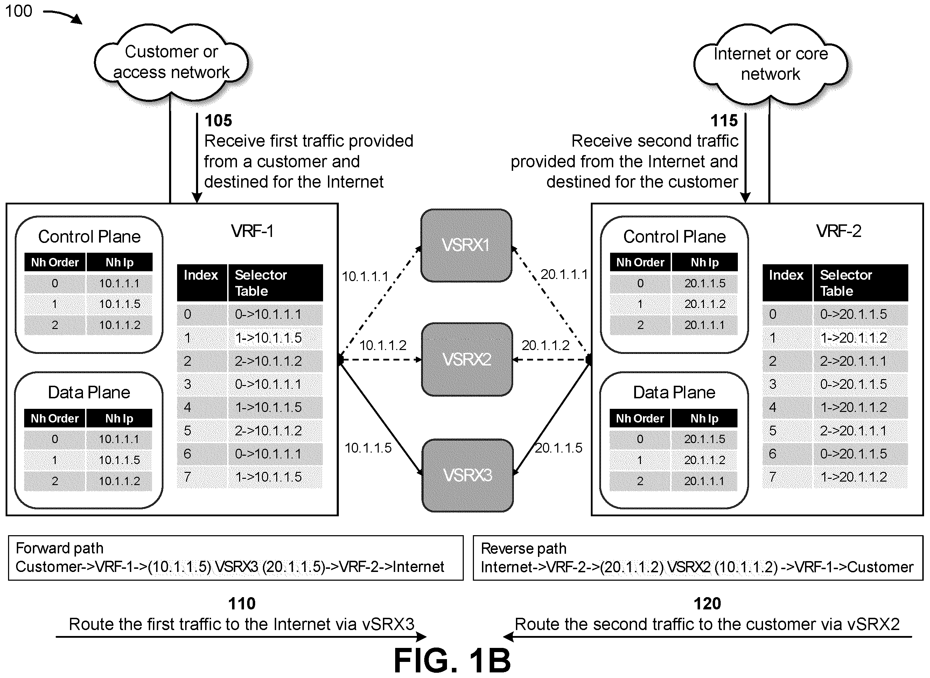

As shown in Fig. 1B, and by reference number 105, the first network device may receive first traffic provided from a customer and destined for the Internet. For example, a customer associated with the customer or access network may generate first traffic destined for the Internet or core network. In some implementations, the first traffic may be associated with a service provided by a service provider, and the service provider would like to keep service traffic flows symmetric (e.g., a firewall that is processing traffic should see the traffic provided from a customer to the Internet and from the Internet to the customer). The customer or access network may provide the first traffic to the first network device, and the first network device may receive the first traffic.

As further shown in Fig. 1B, and by reference number 110, the first network device may route the first traffic to the Internet via the third firewall network device. For example, the first network device may include a control plane, a data plane, and a hash or selector table. The control plane and the data plane may include a hash key that includes a next hop (Nh) order field and a next hop Internet protocol (IP) address field. The next hop order field may include values of 0, 1, 2, and/or the like, and the next hop IP address field may include IP address entries of 10.1.1.1, 10.1.1.5, 10.1.1.2, and/or the like. In some implementations, the first network device may utilize the hash key to generate the hash table, and may utilize the hash table to generate a forward path for routing traffic from the first network device to the Internet. Based on the hash table, the first network device may generate a forward path that routes the first traffic to the third firewall network device, then to the second network device, and finally to the Internet.

As further shown in Fig. 1B, and by reference number 115, the second network device may receive second traffic provided from the Internet and destined for the customer. For example, the service of the service provider may receive the first traffic and may generate the second traffic in response to the first traffic. The second traffic may be destined for the customer or access network. The Internet or core network may provide the second traffic to the second network device, and the second network device may receive the second traffic.

As further shown in Fig. 1B, and by reference number 120, the second network device may route the second traffic to the customer via the second firewall network device. For example, the second network device may include a control plane, a data plane, and a hash or selector table that is not symmetric with the hash table of the first network device. The control plane and the data plane may include a hash key that includes a next hop order field and a next hop IP address field. The next hop order field may include values of 0, 1, 2, and/or the like, and the next hop IP address field may include IP address entries of 20.1.1.5, 10.1.1.2, 10.1.1.1, and/or the like. In some implementations, the second network device may utilize the hash key to generate the hash table, and may utilize the hash table to generate a reverse path for routing traffic from the second network device to the customer or access network. Based on the hash table, the second network device may generate a reverse path that routes the second traffic to the second firewall network device, then to the first network device, and finally to the customer. However, a firewall network device (vSRX3) processing the first traffic is different than a firewall network device (vSRX2) processing the second traffic. Thus, the traffic flows are not symmetric. Symmetry may be stateful in nature and a firewall may create session table entries accordingly in both traffic flow directions. If the network devices fail to symmetrically route traffic, the customer may experience service and session disruptions.

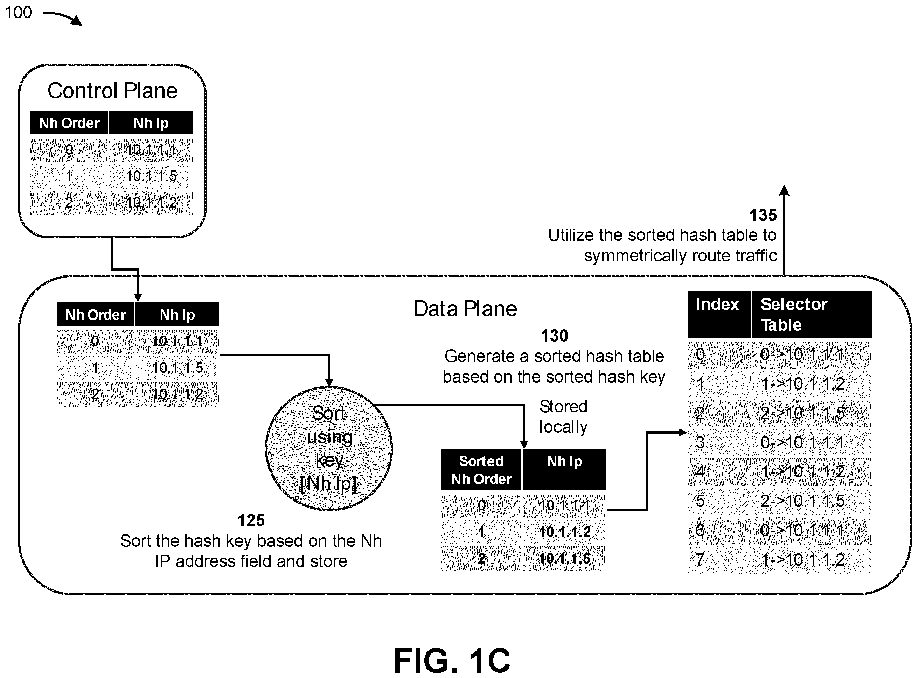

Fig. 1C depicts a control plane and a data plane of the first network device. As shown in Fig. 1C, the control plane and the data plane may include a hash key that includes a next hop order field and a next hop IP address field. For example, the next hop order field may include values of 0, 1, 2, and/or the like, and the next hop IP address field may include IP address entries of 10.1.1.1, 10.1.1.5, 10.1.1.2, and/or the like. In some implementations, the control plane of the first network device may communicate with the firewall network devices to determine the hash key, and may provide the hash key to the data plane of the network device.

As further shown in Fig. 1C, and by reference number 125, the data plane of the first network device may sort the hash key based on the next hop IP address field and to generate a sorted hash key, and may store the sorted hash key locally in the data plane. For example, the data plane may utilize the next hop IP address field to sort the hash key in a particular order (e.g., an ascending order) and to generate the sorted hash key. As shown, the IP address entries of 10.1.1.1, 10.1.1.5, and 10.1.1.2 may be sorted to an order of 10.1.1.1, 10.1.1.2, and 10.1.1.5. The first network device may store the sorted hash key in the data plane of the first network device.

In some implementations, in order to achieve symmetricity with consistency between the first network device and the second network device (e.g., in the upstream (forward) and downstream (reverse) directions), the first network device and the second network device may ensure that consistent hash events are symmetric. If an equal-cost multi-path routing (ECMP) path is disabled in the upstream direction, the ECMP path may be disabled in the downstream direction symmetrically to maintain hash table symmetricity. For example, if a path between the first network device (VRF-1) and the first firewall network device (vSRX1) is disabled, a path between the second network device (VRF-2) and the first firewall network device (vSRX1) may also be disabled. The first network device and the second network device may assign next hop addresses (e.g., IP addresses) from both directions (e.g., downstream: 10.1.1.11, 10.1.1.12, 10.1.1.13 and upstream: 20.1.1.11, 20.1.1.12, 20.1.1.13) so that an index in a sorted ECMP device (e.g., vSRX1, vSRX2, and vSRX3) list (e.g., based on the next hop IP as the hash key) points to the same ECMP device in both directions.

As further shown in Fig. 1C, and by reference number 130, the data plane of the first network device may generate a sorted hash table based on the sorted hash key. For example, based on the sorted hash key, the data plane of the first network device may generate the sorted hash table that includes an index field and a selector table field. The index field may include values of 0, 1, 2, 3, 4, and/or the like, and the selector table field may include entries identifying an order of the next hop IP addresses (e.g., 0→10.1.1.1; 1→10.1.1.2; 2→10.1.1.5; 3→10.1.1.1; and/or the like). In some implementations, the first network device may store the sorted hash table in the data plane of the first network device. In some implementations, the second network device may perform the same functions described above for the first network device so that the second network device generates the same sorted hash table as the first network device. In this way, the first network device and the second network device may symmetrically route traffic to each other, via the firewall network devices.

As further shown in Fig. 1C, and by reference number 135, the first network device may utilize the sorted hash table to symmetrically route traffic. For example, when the first network device receives traffic destined for the Internet or core network, the first network device may utilize the sorted hash table to generate a forward path for routing traffic from the first network device to the Internet or core network. In some implementations, the first network device may select one of the firewall network devices identified in the sorted hash table for the forward path.

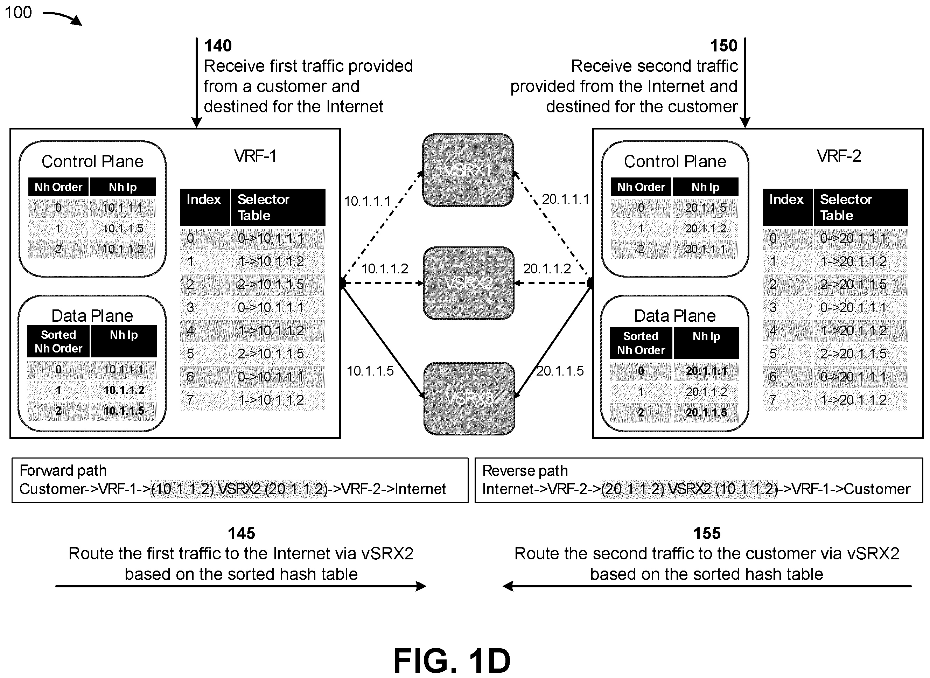

As shown in Fig. 1D, and by reference number 140, the first network device may receive first traffic provided from a customer and destined for the Internet. For example, a customer associated with the customer or access network may generate first traffic destined for the Internet or core network. In some implementations, the first traffic may be associated with a service provided by a service provider, and the service provider would like to keep service traffic flows symmetric (e.g., a firewall that is processing traffic should see the traffic provided from a customer to the Internet and from the Internet to the customer). The customer or access network may provide the first traffic to the first network device, and the first network device may receive the first traffic.

As further shown in Fig. 1D, and by reference number 145, the first network device may route the first traffic to the Internet via the second firewall network device based on the sorted hash table. For example, the first network device may utilize the sorted hash table to generate a forward path for routing the first traffic from the first network device to the Internet. Based on the sorted hash table, the first network device may generate a forward path that routes the first traffic to the second firewall network device, then to the second network device, and finally to the Internet.

As further shown in Fig. 1D, and by reference number 150, the second network device may receive second traffic provided from the Internet and destined for the customer. For example, the service of the service provider may receive the first traffic and may generate the second traffic in response to the first traffic. The second traffic may be destined for the customer or access network. The Internet or core network may provide the second traffic to the second network device, and the second network device may receive the second traffic.

As further shown in Fig. 1D, and by reference number 155, the second network device may route the second traffic to the customer via the second firewall network device based on the sorted hash table. For example, the second network device may utilize the sorted hash table to generate a reverse path for routing the second traffic from the second network device to the customer or access network. Based on the sorted hash table, the second network device may generate a reverse path that routes the second traffic to the second firewall network device, then to the first network device, and finally to the customer. In this implementation, a firewall network device (vSRX2) processing the first traffic is the same as a firewall network device (vSRX2) processing the second traffic. Thus, the traffic flows are symmetric.

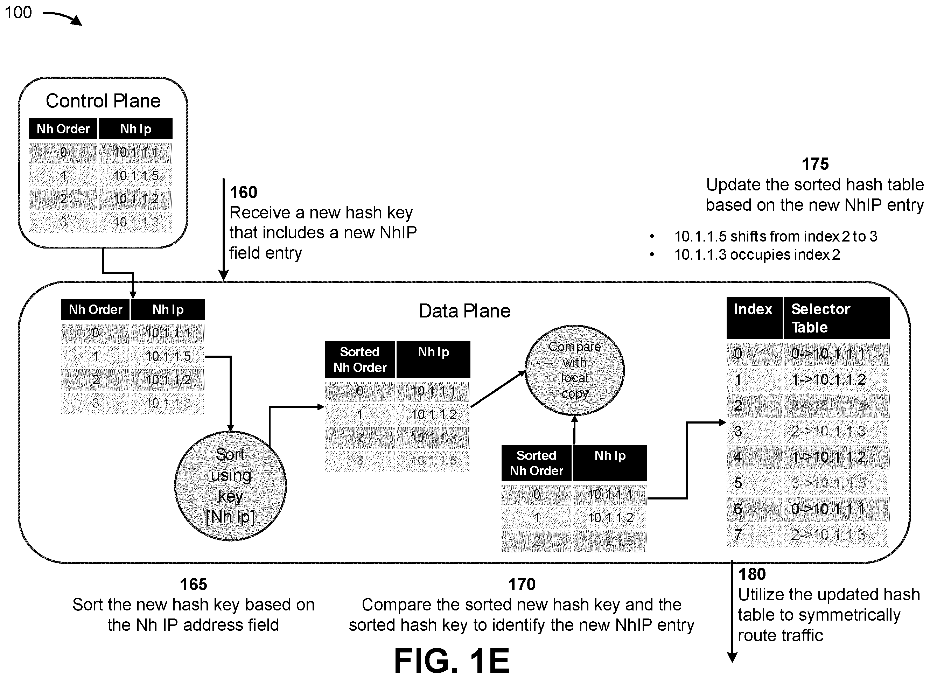

As shown in Fig. 1E, and by reference number 160, the data plane of the first network device may receive a new hash key that includes a new next hop IP address field entry. For example, the control plane of the first network device may communicate with the firewall network devices to determine the new hash key, and may provide the new hash key to the data plane of the network device. As shown, the new hash key may include a new next hop IP address field entry (e.g., 10.1.1.3) that is not included in the hash key shown in Fig. 1C.

As further shown in Fig. 1E, and by reference number 165, the data plane of the first network device may sort the new hash key based on the next hop IP address field and to generate a sorted new hash key. For example, the data plane may utilize the next hop IP address field to sort the new hash key in a particular order (e.g., an ascending order) and to generate the sorted new hash key. As shown, the IP address entries of 10.1.1.1, 10.1.1.5, 10.1.1.2, and 10.1.1.3 may be sorted to an order of 10.1.1.1, 10.1.1.2, 10.1.1.3, and 10.1.1.5. The first network device may store the sorted new hash key in the data plane of the first network device.

As further shown in Fig. 1E, and by reference number 170, the data plane of the first network device may compare the sorted new hash key and the sorted hash key to identify the new next hop IP address field entry. For example, the data plane may compare the entries of the sorted new hash key with the entries of the sorted hash key to determine whether entries are included in the sorted new hash key that are not included in the sorted hash key, and/or to determine whether entries are not included in the sorted new hash key that are included in the sorted hash key. In some implementations, the data plane may identify the new next hop IP address field entry based on comparing the sorted new hash key and the sorted hash key.

As further shown in Fig. 1E, and by reference number 175, the data plane of the first network device may update the sorted hash table based on the new next hop IP address field entry and to generate an updated hash table. For example, based on the new next hop IP address field entry, the data plane of the first network device may generate the updated hash table that includes the index field and the selector table field. The index field may include values of 0, 1, 2, 3, 4, and/or the like, and the selector table field may include entries identifying an order of the next hop IP addresses (e.g., 0→10.1.1.1; 1→10.1.1.2; 3→10.1.1.5; 2→10.1.1.3; and/or the like). In some implementations, the first network device may store the updated hash table in the data plane of the first network device. In some implementations, the second network device may perform the same functions described above for the first network device so that the second network device generates the same updated hash table as the first network device. In this way, the first network device and the second network device may symmetrically route traffic to each other, via the firewall network devices.

As further shown in Fig. 1E, and by reference number 180, the first network device may utilize the updated hash table to symmetrically route traffic. For example, when the first network device receives traffic destined for the Internet or core network, the first network device may utilize the updated hash table to generate a forward path for routing traffic from the first network device to the Internet or core network. In some implementations, the first network device may select one of the firewall network devices identified in the updated hash table for the forward path.

In some implementations, the first network device and the second network device may receive a new hash key that is missing a next hop IP address field entry provided in the hash key, and may sort the new hash key based on a next hop IP address field and to generate a sorted new hash key. The first network device and the second network device may compare the sorted new hash key and the sorted hash key to identify the missing next hop address field entry, and may update the sorted hash table based on the missing next hop address field entry and to generate an updated hash table. The first network device and the second network device may utilize the updated hash table to symmetrically route traffic between the customer or access network and the Internet or core network.

In some implementations, for a symmetric consistent hash, the first network device and the second network device may handle ECMP device/next hop events in the data plane as follows. During device (e.g., a firewall network device) failure, the first network device and the second network device may update the ECMP device/next hop in the data plane with an inactive state and an invalid weight. The failed device may not be accounted for during selector re-computation.

When a device/next hop with exactly the same device IP address as a failed device appears in the new ECMP next hop list from the control plane, the first network device and the second network device may consider this as a device add and may mark the device again as active with a valid weight. If the next hop is unresolved during an initial ECMP next hop list sent from the control plane, the first network device and the second network device may keep the next hop unresolved in the data plane ECMP next hop list and may consider these next hops also as inactive with an invalid weight. While updating the new ECMP next hop list from the control plane, the first network device and the second network device may update these unresolved next hops to resolved next hops with the new devices being provided at positions in the data plane ECMP next hop list.

The first network device and the second network device may consider any new ECMP next hop (e.g., which is not found in the existing data plane) as an unseen device until there is an unresolved next hop present in the data plane ECMP next hop list. The first network device and the second network device may provide hash function or hash key symmetricity based on a pre-existing setting of a load-balance hash (e.g., a hash key function) with a source IP-only in the forward direction and a destination IP-only in the reverse direction to keep the hash key symmetric.

The first network device and the second network device may provide deterministic ECMP path ordering by ensuring a same order/index location of the ECMP devices by keeping next hop IP to active next hop index mapping the same across the first network device and the second network device. This will make hash table indices point to the same ECMP next hop/device in the upstream and downstream directions. For this implementation, the first network device and the second network device may maintain ECMP elements in a sorted order based on next hop IP as the key in the data plane. The first network device and the second network device may maintain a local copy of the next hop IP to active index mapping in the data plane to determine if there is any movement/shift of next hops due to any new devices and their index location dependency in the sorted ECMP list.

The first network device and the second network device may provide control plane out-of-order handling in the data plane. When multiple ECMP devices fail or are added back, the data plane may require ECMP link/node events to be provided in a certain order from the control plane to make the hash table symmetric. To handle such out-of-order events, the first network device and the second network device may preserve two states in the data plane hash table: an original selector state and last failed original selector state. Once all of the unseen device adds are done in both directions, the first network device and the second network device may preserve that state as the original selector state. During multiple device failures, the first network device and the second network device may start building the selector state from this state in a certain order (e.g., ascending during device failure and descending during seen device adds). This may keep failures/adds as a function of order and may provide a reference original state from which to build a hash table in a similar fashion across two independent network devices. During multiple device failures, the first network device and the second network device may preserve the last device failure state as the original last failed selector state. During seen device adds, this state may be utilized as a reference and, on every device add, a network device may generate the hash table from this selector state in descending order (e.g., opposite of device failures). This helps to keep the hash table symmetric as well as maintain balance.

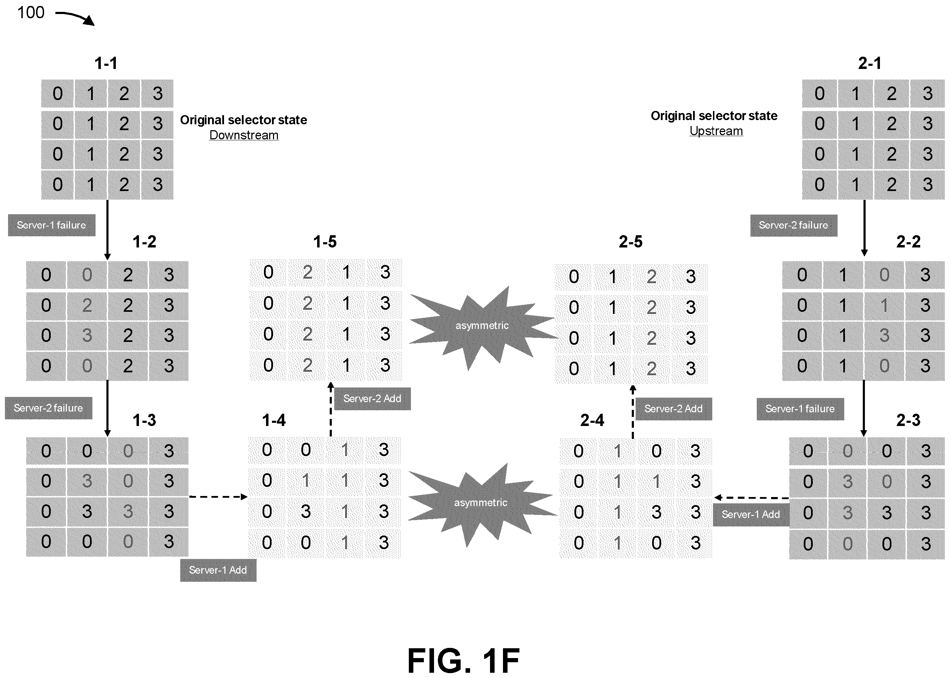

Fig. 1F depicts an example of hash table ordering without symmetric consistent hashing in the forwarding plane. As shown in Fig. 1F, hash table state 1-1 of the first network device may initially match hash table state 2-1 of the second network device. If a first firewall network device (server 1) fails, the first network device may update hash table state 1-1 to hash table state 1-2. If a second firewall network device (server 2) fails, the second network device may update hash table state 2-1 to hash table state 2-2, and the first network device may update hash table state 1-2 to hash table state 1-3. If the first firewall network device (server 1) fails, the second network device may update hash table state 2-2 to hash table state 2-3. If the first firewall network device (server 1) is added back, the first network device may update hash table state 1-3 to hash table state 1-4, and the second network device may update hash table state 2-3 to hash table state 2-4. If the second firewall network device (server 2) is added back, the first network device may update hash table state 1-4 to hash table state 1-5, and the second network device may update hash table state 2-4 to hash table state 2-5. As shown, hash table states 1-2, 1-3, 1-4, and 1-5 fail to match corresponding hash table states 2-2, 2-3, 2-4, and 2-5. Thus, the hash table states in the first network device and the second network device are asymmetric.

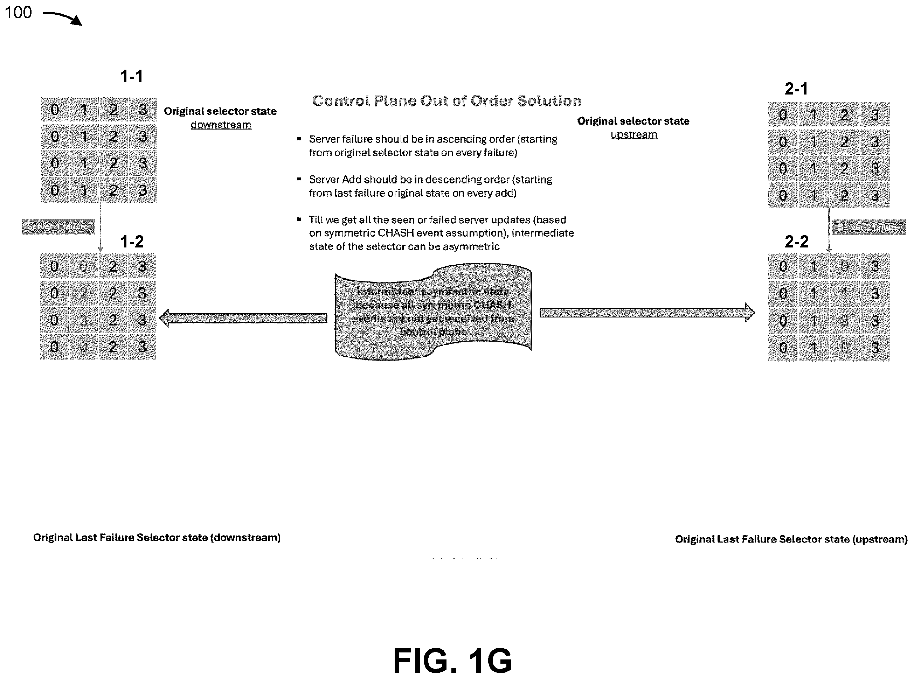

Figs. 1G-1K depict an example of hash table ordering with symmetric consistent hashing in the forwarding plane. As shown in Fig. 1G, hash table state 1-1 of the first network device may initially match hash table state 2-1 of the second network device. If the first firewall network device (server 1) fails, the first network device may update hash table state 1-1 to hash table state 1-2. If the second firewall network device (server 2) fails, the second network device may update hash table state 2-1 to hash table state 2-2. At this point, a transient asymmetric state may exist because all hash events are not received from the control plane.

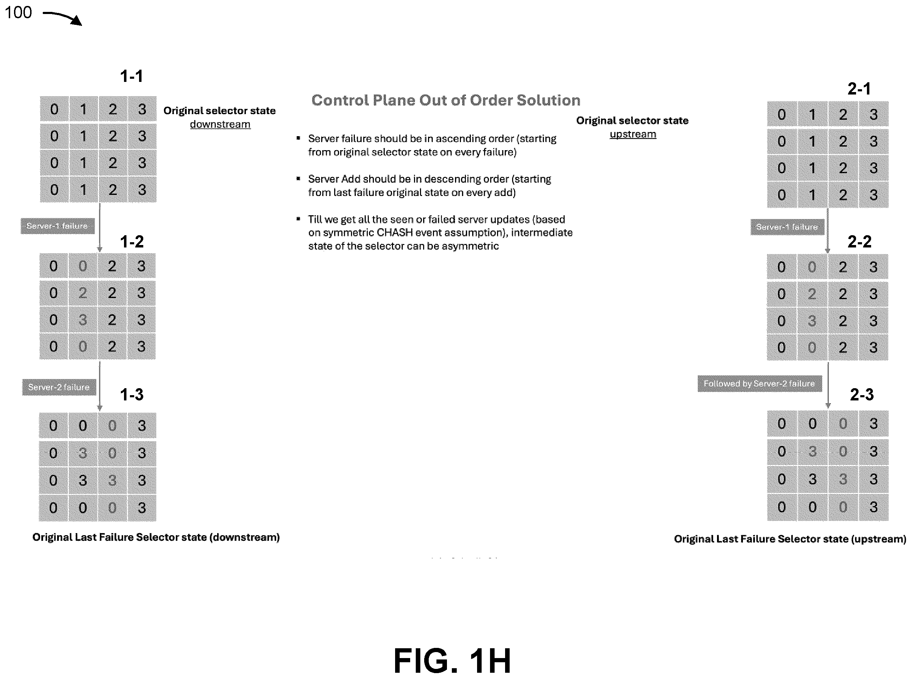

As shown in Fig. 1H, if the second firewall network device (server 2) fails, the first network device may update hash table state 1-2 to hash table state 1-3, and the second network device may update hash table state 2-2 to hash table state 2-3. Hash table state 1-3 may match hash table state 2-3.

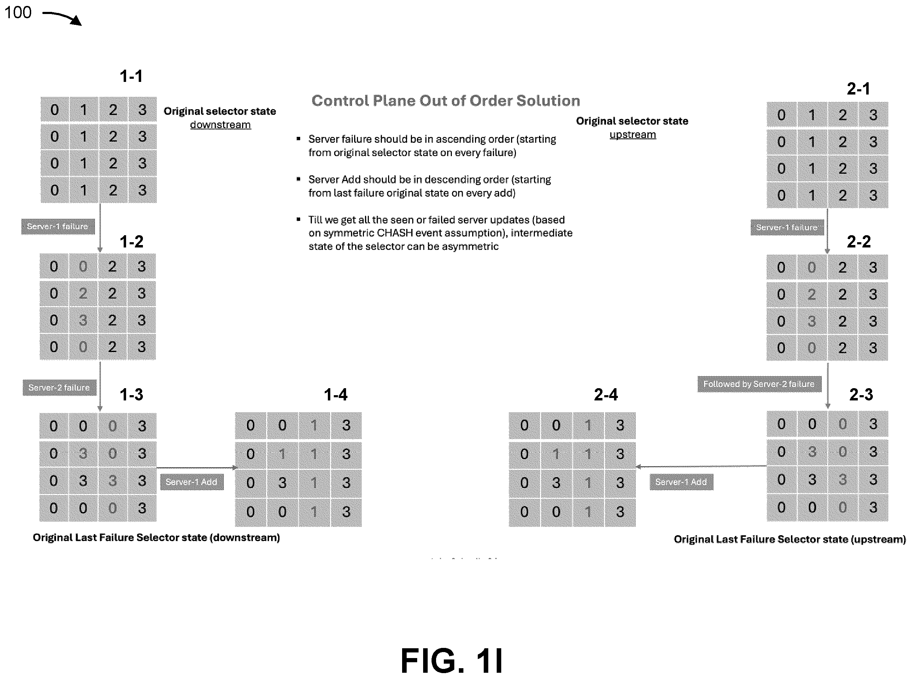

As shown in Fig. 1I, if the first firewall network device (server 1) is added back, the first network device may update hash table state 1-3 to hash table state 1-4, and the second network device may update hash table state 2-3 to hash table state 2-4. Hash table state 1-4 may match hash table state 2-4.

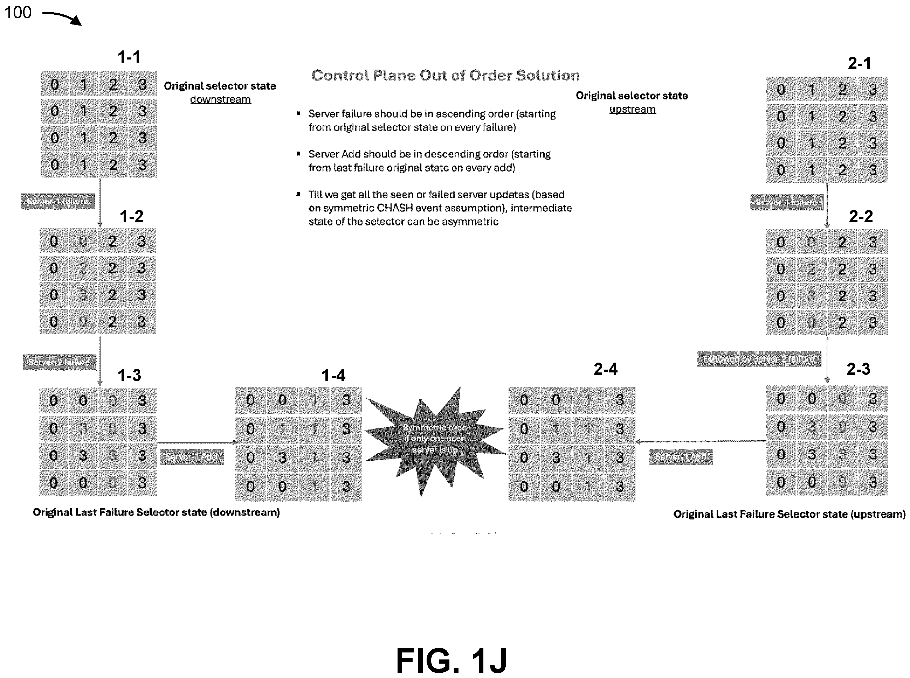

As shown in Fig. 1J, the hash table states in the first network device and the second network device are symmetric. In some implementations, a server failure may be handled in an ascending order, starting from the original selector state on every failure. In some implementations, a server add may be handled in a descending order, starting from a last failure original state on every add.

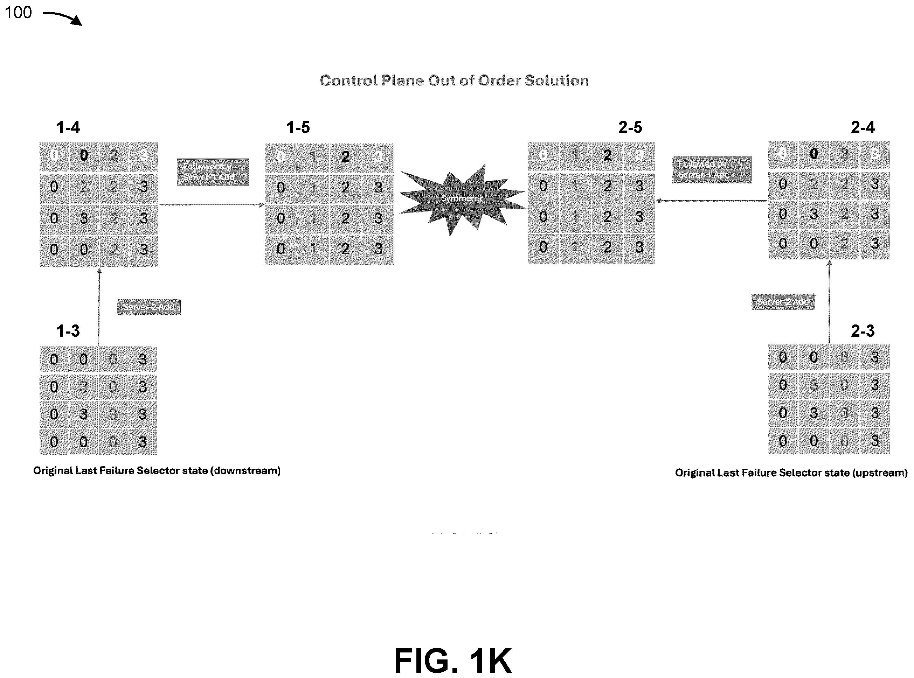

As shown in Fig. 1K, if the second firewall network device (server 2) is added back, the first network device may update hash table state 1-3 to hash table state 1-4, and the second network device may update hash table state 2-3 to hash table state 2-4. Hash table state 1-4 may match hash table state 2-4. As further shown in Fig. 1K, if the first firewall network device (server 1) is added back, the first network device may update hash table state 1-4 to hash table state 1-5, and the second network device may update hash table state 2-4 to hash table state 2-5. Hash table state 1-5 may match hash table state 2-5.

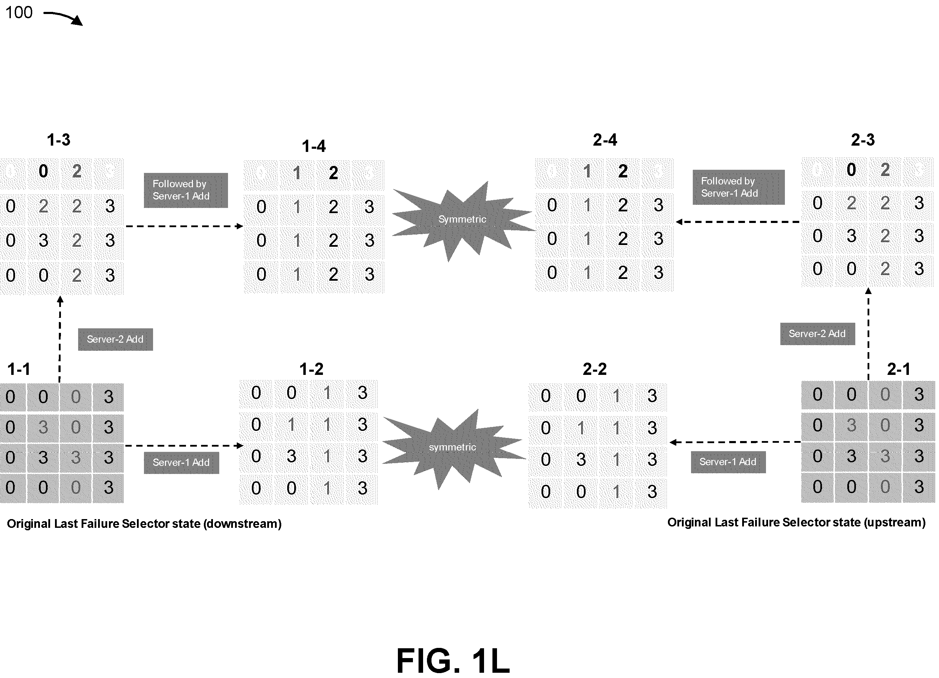

Fig. 1L depicts another example of hash table ordering with symmetric consistent hashing in the forwarding plane. As shown in Fig. 1L, hash table state 1-1 of the first network device may initially match hash table state 2-1 of the second network device. If the first firewall network device (server 1) is added, the first network device may update hash table state 1-1 to hash table state 1-2, and the second network device may update hash table state 2-1 to hash table state 2-2. Hash table state 1-2 may match hash table state 2-2. If the second firewall network device (server 2) is added, the first network device may update hash table state 1-1 to hash table state 1-3, and the second network device may update hash table state 2-1 to hash table state 2-3. Hash table state 1-3 may match hash table state 2-3. If the first firewall network device (server 1) is added after adding the second firewall network device (server 2), the first network device may update hash table state 1-3 to hash table state 1-4, and the second network device may update hash table state 2-3 to hash table state 2-4. Hash table state 1-4 may match hash table state 2-4. Thus, the hash table states in the first network device and the second network device are symmetric.

In this way, symmetric consistent hashing in a forwarding plane is provided for a network device. For example, a network device may utilize parameters that symmetrically select the same hash or selector table index in the upstream direction and the downstream direction. Hash tables across active network devices in the upstream and downstream directions may be symmetric so that a selected hash table index includes the same next hop in both directions. The network device may provide a forwarding plane driven solution that works independently of routing protocols. Thus, the network device conserves computing resources, networking resources, and/or the like that would otherwise have been consumed by failing to provide traffic flow consistency and symmetricity for upstream traffic and downstream traffic handled by network devices, handling service disruptions associated with failing to provide traffic flow consistency and symmetricity, handling session disruptions associated with failing to provide traffic flow consistency and symmetricity, and/or the like.

As indicated above, Figs. 1A-1L are provided as an example. Other examples may differ from what is described with regard to Figs. 1A-1L. The number and arrangement of devices shown in Figs. 1A-1L are provided as an example. In practice, there may be additional devices, fewer devices, different devices, or differently arranged devices than those shown in Figs. 1A-1L. Furthermore, two or more devices shown in Figs. 1A-1L may be implemented within a single device, or a single device shown in Figs. 1A-1L may be implemented as multiple, distributed devices. Additionally, or alternatively, a set of devices (e.g., one or more devices) shown in Figs. 1A-1L may perform one or more functions described as being performed by another set of devices shown in Figs. 1A-1L.

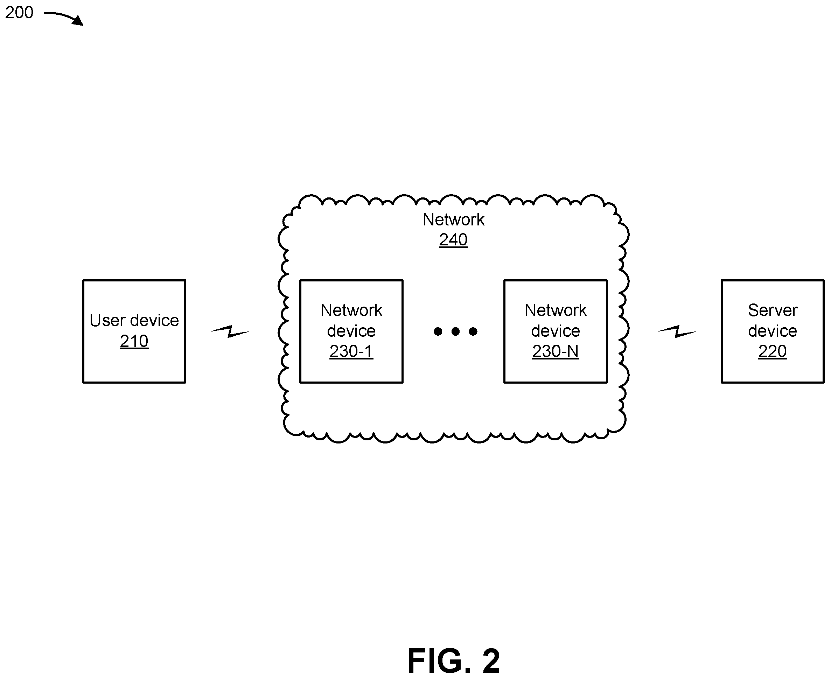

Fig. 2 is a diagram of an example environment 200 in which systems and/or methods described herein may be implemented. As shown in Fig. 2, the environment 200 may include a user device 210, a server device 220, a group of network devices 230 (shown as network device 230-1 through network device 230-N), and a network 240. Devices of the environment 200 may interconnect via wired connections, wireless connections, or a combination of wired and wireless connections.

The user device 210 includes one or more devices capable of receiving, generating, storing, processing, and/or providing information, such as information described herein. For example, the user device 210 may include a mobile phone (e.g., a smart phone or a radiotelephone), a laptop computer, a tablet computer, a desktop computer, a handheld computer, a gaming device, a wearable communication device (e.g., a smart watch, a pair of smart glasses, a heart rate monitor, a fitness tracker, smart clothing, smart jewelry, or a head mounted display), a network device, a server device, a group of server devices, or a similar type of device. In some implementations, the user device 210 may receive network traffic from and/or may provide network traffic to other user devices 210 and/or the server device 220, via the network 240 (e.g., by routing packets using the network devices 230 as intermediaries).

The server device 220 may include one or more devices capable of receiving, generating, storing, processing, providing, and/or routing information, as described elsewhere herein. The server device 220 may include a communication device and/or a computing device. For example, the server device 220 may include a server, such as an application server, a client server, a web server, a database server, a host server, a proxy server, a virtual server (e.g., executing on computing hardware), or a server in a cloud computing system. In some implementations, the server device 220 may include computing hardware used in a cloud computing environment.

The network device 230 includes one or more devices capable of receiving, processing, storing, routing, and/or providing traffic (e.g., a packet or other information or metadata) in a manner described herein. For example, the network device 230 may include a router, such as a label switching router (LSR), a label edge router (LER), an ingress router, an egress router, a provider router (e.g., a provider edge router or a provider core router), a virtual router, a route reflector, an area border router, or another type of router. Additionally, or alternatively, the network device 230 may include a gateway, a switch, a firewall, a hub, a bridge, a reverse proxy, a server (e.g., a proxy server, a cloud server, or a data center server), a load balancer, and/or a similar device. In some implementations, the network device 230 may be a physical device implemented within a housing, such as a chassis. In some implementations, the network device 230 may be a virtual device implemented by one or more computer devices of a cloud computing environment or a data center. In some implementations, a group of network devices 230 may be a group of data center nodes that are used to route traffic flow through the network 240.

The network 240 includes one or more wired and/or wireless networks. For example, the network 240 may include a packet switched network, a cellular network (e.g., a fifth generation (5G) network, a fourth generation (4G) network, such as a long-term evolution (LTE) network, a third generation (3G) network, a code division multiple access (CDMA) network, a public land mobile network (PLMN)), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, or the like, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of the environment 200 may perform one or more functions described as being performed by another set of devices of the environment 200.

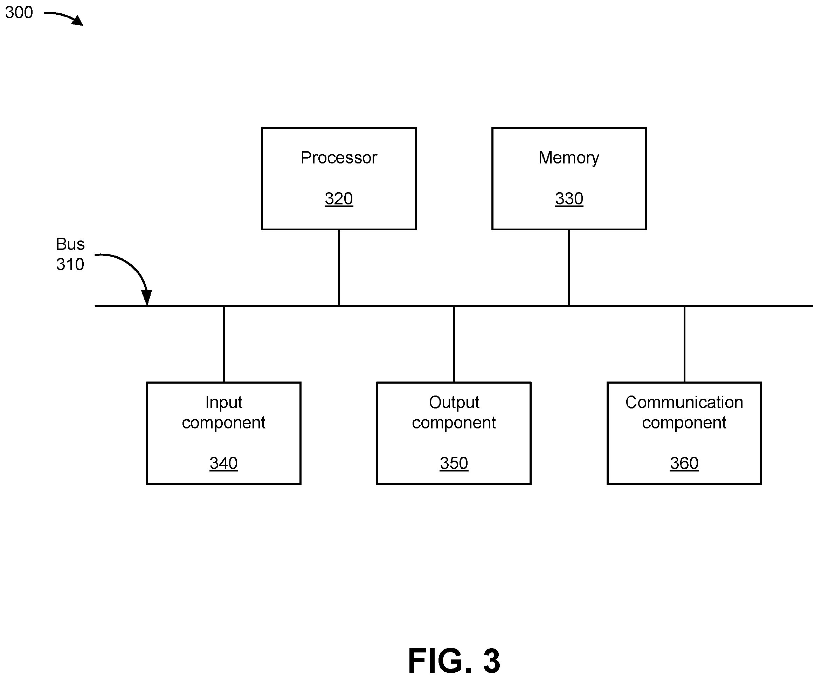

Fig. 3 is a diagram of example components of one or more devices of Fig. 2. The example components may be included in a device 300, which may correspond to the user device 210, the server device 220, and/or the network device 230. In some implementations, the user device 210, the server device 220, and/or the network device 230 may include one or more devices 300 and/or one or more components of the device 300. As shown in Fig. 3, the device 300 may include a bus 310, a processor 320, a memory 330, an input component 340, an output component 350, and a communication component 360.

The bus 310 includes one or more components that enable wired and/or wireless communication among the components of the device 300. The bus 310 may couple together two or more components of Fig. 3, such as via operative coupling, communicative coupling, electronic coupling, and/or electric coupling. The processor 320 includes a central processing unit (CPU), a graphics processing unit (GPU), an accelerated processing unit (APU), a microprocessor, a controller, a microcontroller, a digital signal processor (DSP), a field-programmable gate array (FPGA), an application-specific integrated circuit (ASIC), and/or another type of processing component. The processor 320 is implemented in hardware, firmware, or a combination of hardware and software. In some implementations, the processor 320 includes one or more processors capable of being programmed to perform one or more operations or processes described elsewhere herein.

The memory 330 includes volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a computer-readable medium. The memory 330 stores information, instructions, and/or software (e.g., one or more software applications) related to the operation of the device 300. In some implementations, the memory 330 includes one or more memories that are coupled to one or more processors (e.g., the processor 320), such as via the bus 310.

The input component 340 enables the device 300 to receive input, such as user input and/or sensed input. For example, the input component 340 may include a touch screen, a keyboard, a keypad, a mouse, a button, a microphone, a switch, a sensor, a global positioning system sensor, an accelerometer, a gyroscope, and/or an actuator. The output component 350 enables the device 300 to provide output, such as via a display, a speaker, and/or a light-emitting diode. The communication component 360 enables the device 300 to communicate with other devices via a wired connection and/or a wireless connection. For example, the communication component 360 may include a receiver, a transmitter, a transceiver, a modem, a network interface card, and/or an antenna.

The device 300 may perform one or more operations or processes described herein. For example, a computer-readable medium (e.g., the memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

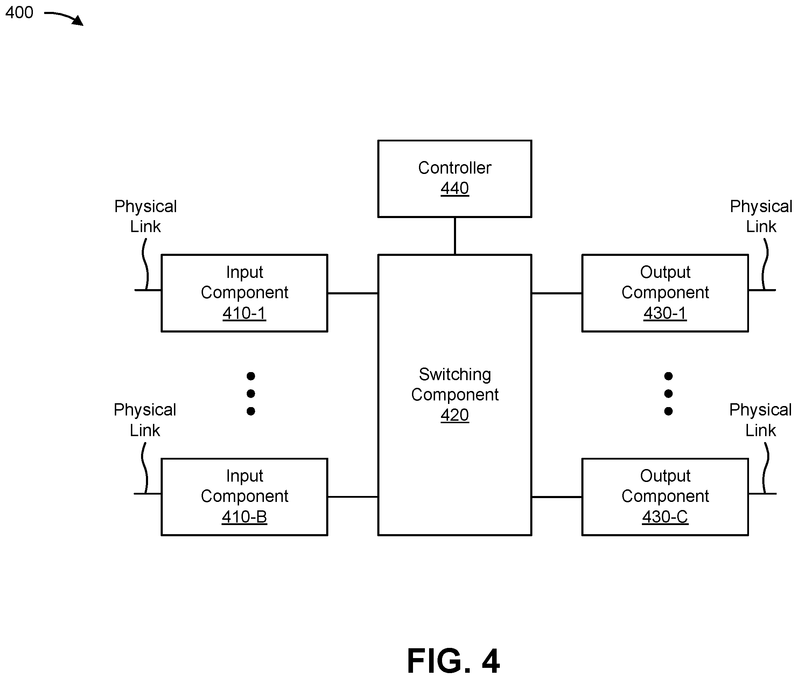

Fig. 4 is a diagram of example components of one or more devices of Fig. 2. The example components may be included in a device 400. The device 400 may correspond to the network device 230. In some implementations, the network device 230 may include one or more devices 400 and/or one or more components of the device 400. As shown in Fig. 4, the device 400 may include one or more input components 410-1 through 410-B (B ≥ 1) (hereinafter referred to collectively as input components 410, and individually as input component 410), a switching component 420, one or more output components 430-1 through 430-C (C ≥ 1) (hereinafter referred to collectively as output components 430, and individually as output component 430), and a controller 440.

The input component 410 may be one or more points of attachment for physical links and may be one or more points of entry for incoming traffic, such as packets. The input component 410 may process incoming traffic, such as by performing data link layer encapsulation or decapsulation. In some implementations, the input component 410 may transmit and/or receive packets. In some implementations, the input component 410 may include an input line card that includes one or more packet processing components (e.g., in the form of integrated circuits), such as one or more interface cards (IFCs), packet forwarding components, line card controller components, input ports, processors, memories, and/or input queues. In some implementations, the device 400 may include one or more input components 410.

The switching component 420 may interconnect the input components 410 with the output components 430. In some implementations, the switching component 420 may be implemented via one or more crossbars, via busses, and/or with shared memories. The shared memories may act as temporary buffers to store packets from the input components 410 before the packets are eventually scheduled for delivery to the output components 430. In some implementations, the switching component 420 may enable the input components 410, the output components 430, and/or the controller 440 to communicate with one another.

The output component 430 may store packets and may schedule packets for transmission on output physical links. The output component 430 may support data link layer encapsulation or decapsulation, and/or a variety of higher-level protocols. In some implementations, the output component 430 may transmit packets and/or receive packets. In some implementations, the output component 430 may include an output line card that includes one or more packet processing components (e.g., in the form of integrated circuits), such as one or more IFCs, packet forwarding components, line card controller components, output ports, processors, memories, and/or output queues. In some implementations, the device 400 may include one or more output components 430. In some implementations, the input component 410 and the output component 430 may be implemented by the same set of components (e.g., and input/output component may be a combination of the input component 410 and the output component 430).

The controller 440 includes a processor in the form of, for example, a CPU, a GPU, an APU, a microprocessor, a microcontroller, a DSP, an FPGA, an ASIC, and/or another type of processor. The processor is implemented in hardware, firmware, or a combination of hardware and software. In some implementations, the controller 440 may include one or more processors that can be programmed to perform a function.

In some implementations, the controller 440 may include a RAM, a ROM, and/or another type of dynamic or static storage device (e.g., a flash memory, a magnetic memory, an optical memory, etc.) that stores information and/or instructions for use by the controller 440.

In some implementations, the controller 440 may communicate with other devices, networks, and/or systems connected to the device 400 to exchange information regarding network topology. The controller 440 may create routing tables based on the network topology information, may create forwarding tables based on the routing tables, and may forward the forwarding tables to the input components 410 and/or output components 430. The input components 410 and/or the output components 430 may use the forwarding tables to perform route lookups for incoming and/or outgoing packets.

The controller 440 may perform one or more processes described herein. The controller 440 may perform these processes in response to executing software instructions encoded by a computer-readable medium. A computer-readable medium can include a non-transitory memory device. A memory device includes memory space within a single physical storage device or memory space spread across multiple physical storage devices. Additionally, or alternatively, a computer-readable medium can include transient media such as carrier waves and transmission media.

Software instructions may be read into a memory and/or storage component associated with the controller 440 from another computer-readable medium or from another device via a communication component. When executed, software instructions stored in a memory and/or storage component associated with the controller 440 may cause the controller 440 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 4 are provided as an example. In practice, the device 400 may include additional components, fewer components, different components, or differently arranged components than those shown in Fig. 4. Additionally, or alternatively, a set of components (e.g., one or more components) of the device 400 may perform one or more functions described as being performed by another set of components of the device 400.

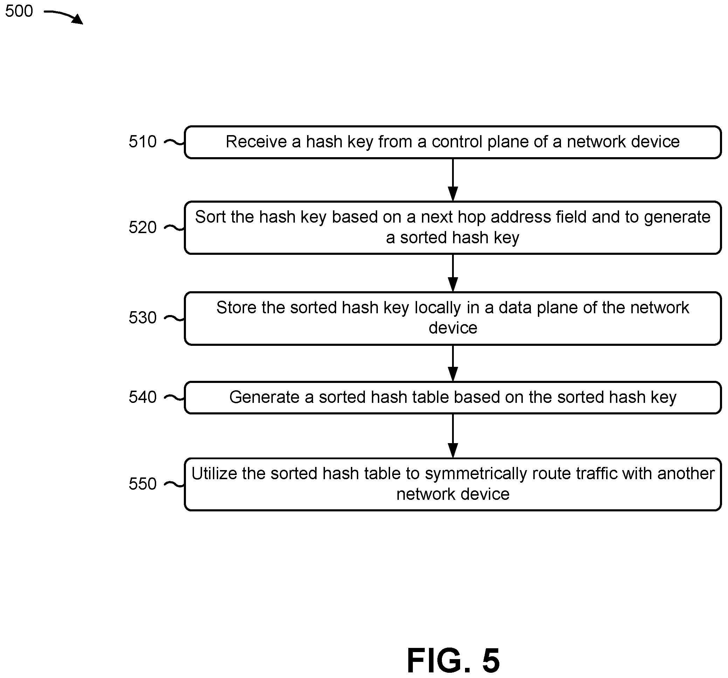

Fig. 5 is a flowchart of an example process 500 for providing symmetric consistent hashing in a forwarding plane of a network device. In some implementations, one or more process blocks of Fig. 5 may be performed by a network device (e.g., a network device 230). In some implementations, one or more process blocks of Fig. 5 may be performed by another device or a group of devices separate from or including the network device, such as another network device (e.g., a network device 230). Additionally, or alternatively, one or more process blocks of Fig. 5 may be performed by one or more components of the device 300, such as the processor 320, the memory 330, the input component 340, the output component 350, and/or the communication component 360. Additionally, or alternatively, one or more process blocks of Fig. 5 may be performed by one or more components of the device 400, such as the input component 410, the switching component 420, the output component 430, and/or the controller 440.

As shown in Fig. 5, process 500 may include receiving a hash key from a control plane of the network device (block 510). For example, the network device may receive a hash key from a control plane of the network device, as described above. In some implementations, the hash key is a load-balance hash key function.

As further shown in Fig. 5, process 500 may include sorting the hash key based on a next hop address field and to generate a sorted hash key (block 520). For example, the network device may sort the hash key based on a next hop address field and to generate a sorted hash key, as described above. In some implementations, sorting the hash key based on the next hop address field and to generate the sorted hash key includes utilizing the data plane of the network device to sort the hash key based on the next hop address field and to generate the sorted hash key.

As further shown in Fig. 5, process 500 may include storing the sorted hash key locally in a data plane of the network device (block 530). For example, the network device may store the sorted hash key locally in a data plane of the network device, as described above.

As further shown in Fig. 5, process 500 may include generating a sorted hash table based on the sorted hash key (block 540). For example, the network device may generate a sorted hash table based on the sorted hash key, as described above.

As further shown in Fig. 5, process 500 may include utilizing the sorted hash table to symmetrically route traffic with another network device (block 550). For example, the network device may utilize the sorted hash table to symmetrically route traffic with another network device, as described above.

In some implementations, process 500 includes receiving first traffic provided from a customer and destined for a core network, and routing the first traffic to the core network, through a firewall network device and the other network device, based on the sorted hash table. In some implementations, process 500 includes receiving second traffic provided from the core network and destined for the customer, wherein the second traffic is received from the other network device, through the firewall network device and based on the sorted hash table, and providing the second traffic to the customer. In some implementations, the core network is an Internet protocol based network. In some implementations, the first traffic is received from an access network.

In some implementations, process 500 includes receiving a new hash key that includes a new next hop address field entry, sorting the new hash key based on a next hop address field and to generate a sorted new hash key, and comparing the sorted new hash key and the sorted hash key to identify the new next hop address field entry. In some implementations, process 500 includes updating the sorted hash table based on the new next hop address field entry and to generate an updated hash table, and utilizing the updated hash table to symmetrically route traffic.

In some implementations, process 500 includes receiving a new hash key that is missing a next hop address field entry provided in the hash key, sorting the new hash key based on a next hop address field and to generate a sorted new hash key, and comparing the sorted new hash key and the sorted hash key to identify the missing next hop address field entry. In some implementations, process 500 includes updating the sorted hash table based on the missing next hop address field entry and to generate an updated hash table, and utilizing the updated hash table to symmetrically route traffic.

In some implementations, process 500 includes receiving, from the other network device, an indication that an equal-cost multi-path routing (ECMP) path is disabled in an upstream direction, and disabling the ECMP path in a downstream direction based on the indication and to maintain hash table symmetricity. In some implementations, process 500 includes receiving an indication that a path between the other network device and a firewall network device is disabled, and disabling a path between the network device and the firewall network device based on the indication.

Although Fig. 5 shows example blocks of process 500, in some implementations, process 500 may include additional blocks, fewer blocks, different blocks, or differently arranged blocks than those depicted in Fig. 5. Additionally, or alternatively, two or more of the blocks of process 500 may be performed in parallel.

Thus, from one perspective, there has now been described a network device which may receive a hash key from a control plane of the network device, and may sort the hash key based on a next hop address field and to generate a sorted hash key. The network device may store the sorted hash key locally in a data plane of the network device, and may generate a sorted hash table based on the sorted hash key. The network device may utilize the sorted hash table to symmetrically route traffic with another network device.

The foregoing disclosure provides illustration and description but is not intended to be exhaustive or to limit the implementations to the precise form disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set.

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

In the preceding specification, various example embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

Further examples of feature combinations taught by the present disclosure are set out in the following numbered clauses:
1. A method, comprising:
   receiving, by a network device, a hash key from a control plane of the network device;
   sorting, by the network device, the hash key based on a next hop address field and to generate a sorted hash key;
   storing, by the network device, the sorted hash key locally in a data plane of the network device;
   generating, by the network device, a sorted hash table based on the sorted hash key; and
   utilizing, by the network device, the sorted hash table to symmetrically route traffic with another network device.
2. The method of clause 1, further comprising:
   receiving first traffic provided from a customer and destined for a core network; and
   routing the first traffic to the core network, through a firewall network device and the other network device, based on the sorted hash table.
3. The method of clause 2, further comprising:
   receiving second traffic provided from the core network and destined for the customer,
      wherein the second traffic is received from the other network device, via the firewall network device and based on the sorted hash table; and
   providing the second traffic to the customer.
4. The method of clause 3, wherein the core network is an Internet protocol based network.
5. The method of any of clauses 2 to 4, wherein the first traffic is received from an access network.
6. The method of any preceding clause, further comprising:
   receiving a new hash key that includes a new next hop address field entry;
   sorting the new hash key based on a next hop address field and to generate a sorted new hash key; and
   comparing the sorted new hash key and the sorted hash key to identify the new next hop address field entry.
7. The method of clause 6, further comprising:
   updating the sorted hash table based on the new next hop address field entry and to generate an updated hash table; and
   utilizing the updated hash table to symmetrically route traffic.
8. A network device, comprising:
   one or more memories; and
   one or more processors to:
      receive a hash key from a control plane of the network device;
      sort the hash key based on a next hop address field and to generate a sorted hash key;
      store the sorted hash key locally in a data plane of the network device;
      generate a sorted hash table based on the sorted hash key;
      receive first traffic provided from a customer and destined for a core network; and
      route the first traffic to the core network, through a firewall network device and the other network device, based on the sorted hash table.
9. The network device of clause 8, wherein the one or more processors are further to:
   receive a new hash key that is missing a next hop address field entry provided in the hash key;
   sort the new hash key based on a next hop address field and to generate a sorted new hash key; and
   compare the sorted new hash key and the sorted hash key to identify the missing next hop address field entry.
10. The network device of clause 9, wherein the one or more processors are further to:
   update the sorted hash table based on the missing next hop address field entry and to generate an updated hash table; and
   utilize the updated hash table to symmetrically route traffic.
11. The network device of any of clauses 8 to 10, wherein the one or more processors, to sort the hash key based on the next hop address field and to generate the sorted hash key, are to:
   utilize the data plane of the network device to sort the hash key based on the next hop address field and to generate the sorted hash key.
12. The network device of any of clauses 8 to 11, wherein the one or more processors are further to:
   receive, from the other network device, an indication that an equal-cost multi-path routing (ECMP) path is disabled in an upstream direction; and
   disable the ECMP path in a downstream direction based on the indication and to maintain hash table symmetricity.
13. The network device of any of clauses 8 to 12, wherein the one or more processors are further to:
   receive an indication that a path between the other network device and a firewall network device is disabled; and
   disable a path between the network device and the firewall network device based on the indication.
14. The network device of any of clauses 8 to 13, wherein the hash key is a load-balance hash key function.
15. A computer-readable medium encoding a set of instructions, the set of instructions comprising:
   one or more instructions that, when executed by one or more processors of a network device, cause the network device to:
   receive a hash key from a control plane of the network device,
      wherein the hash key is a load-balance hash key function;
   sort the hash key based on a next hop address field and to generate a sorted hash key;
   store the sorted hash key locally in a data plane of the network device;
   generate a sorted hash table based on the sorted hash key; and
   utilize the sorted hash table to symmetrically route traffic with another network device.
16. The computer-readable medium of clause 15, wherein the one or more instructions further cause the network device to:
   receive first traffic provided from a customer and destined for a core network;
   route the first traffic to the core network, through a firewall network device and the other network device, based on the sorted hash table; and
   receive second traffic provided from the core network and destined for the customer,
      wherein the second traffic is received from the other network device, via the firewall network device and based on the sorted hash table; and
   provide the second traffic to the customer.
17. The computer-readable medium of clause 15 or clause 16, wherein the one or more instructions further cause the network device to:
   receive a new hash key that includes a new next hop address field entry;
   sort the new hash key based on a next hop address field and to generate a sorted new hash key; and
   compare the sorted new hash key and the sorted hash key to identify the new next hop address field entry.
18. The computer-readable medium of clause 17, wherein the one or more instructions further cause the network device to:
   update the sorted hash table based on the new next hop address field entry and to generate an updated hash table; and
   utilize the updated hash table to symmetrically route traffic.
19. The computer-readable medium of any of clauses 15 to 18, wherein the one or more instructions further cause the network device to:
   receive a new hash key that is missing a next hop address field entry provided in the hash key;
   sort the new hash key based on a next hop address field and to generate a sorted new hash key; and
   compare the sorted new hash key and the sorted hash key to identify the missing next hop address field entry.
20. The computer-readable medium of clause 19, wherein the one or more instructions further cause the network device to:
   update the sorted hash table based on the missing next hop address field entry and to generate an updated hash table; and
   utilize the updated hash table to symmetrically route traffic.

## Claims

1. A method, comprising:
receiving, by a network device, a hash key from a control plane of the network device;
sorting, by the network device, the hash key based on a next hop address field and to generate a sorted hash key;
storing, by the network device, the sorted hash key locally in a data plane of the network device;
generating, by the network device, a sorted hash table based on the sorted hash key; and
utilizing, by the network device, the sorted hash table to symmetrically route traffic with another network device.

2. The method of claim 1, further comprising:
receiving first traffic provided from a customer and destined for a core network; and
routing the first traffic to the core network, through a firewall network device and the other network device, based on the sorted hash table.

3. The method of claim 2, further comprising:
receiving second traffic provided from the core network and destined for the customer,
wherein the second traffic is received from the other network device, via the firewall network device and based on the sorted hash table; and
providing the second traffic to the customer.

4. The method of claim 3, wherein the core network is an Internet protocol based network.

5. The method of any of claims 2 to 4, wherein the first traffic is received from an access network.

6. The method of any preceding claim, further comprising:
receiving a new hash key that includes a new next hop address field entry;
sorting the new hash key based on a next hop address field and to generate a sorted new hash key; and
comparing the sorted new hash key and the sorted hash key to identify the new next hop address field entry.

7. The method of claim 6, further comprising:
updating the sorted hash table based on the new next hop address field entry and to generate an updated hash table; and
utilizing the updated hash table to symmetrically route traffic.

8. A network device, comprising:
one or more memories; and
one or more processors to:
receive a hash key from a control plane of the network device;
sort the hash key based on a next hop address field and to generate a sorted hash key;
store the sorted hash key locally in a data plane of the network device;
generate a sorted hash table based on the sorted hash key;
receive first traffic provided from a customer and destined for a core network; and
route the first traffic to the core network, through a firewall network device and the other network device, based on the sorted hash table.

9. The network device of claim 8, wherein the one or more processors are further to:
receive a new hash key that is missing a next hop address field entry provided in the hash key;
sort the new hash key based on a next hop address field and to generate a sorted new hash key; and
compare the sorted new hash key and the sorted hash key to identify the missing next hop address field entry.

10. The network device of claim 9, wherein the one or more processors are further to:
update the sorted hash table based on the missing next hop address field entry and to generate an updated hash table; and
utilize the updated hash table to symmetrically route traffic.

11. The network device of any of claims 8 to 10, wherein the one or more processors, to sort the hash key based on the next hop address field and to generate the sorted hash key, are to:
utilize the data plane of the network device to sort the hash key based on the next hop address field and to generate the sorted hash key.

12. The network device of any of claims 8 to 11, wherein the one or more processors are further to:
receive, from the other network device, an indication that an equal-cost multi-path routing (ECMP) path is disabled in an upstream direction; and
disable the ECMP path in a downstream direction based on the indication and to maintain hash table symmetricity.

13. The network device of any of claims 8 to 12, wherein the one or more processors are further to:
receive an indication that a path between the other network device and a firewall network device is disabled; and
disable a path between the network device and the firewall network device based on the indication.

14. The network device of any of claims 8 to 13, wherein the hash key is a load-balance hash key function.

15. A computer-readable medium encoding instructions which, when executed by a network device, cause the network device to carry out the method of any of claims 1 to 7.
